# EUROPEAN PATENT APPLICATION

(11) **EP 4 496 108 A1**
(43) Date of publication of application: **22.01.2025**
(21) Application number: 22958360.4
(22) Date of filing: 13.09.2022
(51) Int. Cl.: H01M 50/533, H01M 50/531, H01M 50/593, H01M 50/553

(54) **BATTERY CELL, BATTERY, ELECTRIC APPARATUS, AND MANUFACTURING METHOD**

(71) Applicant: Contemporary Amperex Technology (Hong Kong) Limited, Central, Central And Western District (HK)
(72) Inventor: CHENG, Qi, Ningde, Fujian 352100 (CN); YANG, Rui, Ningde, Fujian 352100 (CN); LI, Quankun, Ningde, Fujian 352100 (CN); WANG, Hong, Ningde, Fujian 352100 (CN); YANG, Kaihuan, Ningde, Fujian 352100 (CN)
(74) Representative: Herrmann, Uwe
(86) International application number: PCT/CN2022/118506
(87) International publication number: WO 2024/055166

(57) **Abstract**

This application provides a battery cell, a battery, an electricity consuming device and a preparation method. The battery cell includes an electrode assembly and an adapter, the electrode assembly includes at least two electrode bodies arranged side by side along a first direction and tabs extending from the electrode bodies, a plurality of electrode bodies improve electrical capacity of the battery cell, the tab includes an extension portion and a bent portion, the extension portion extends from the electrode body along a second direction, the bent portion is connected with an end of the extension portion away from the electrode body and extends along a first direction, an adapter is connected with the tabs, the current of the electrode body is conducted by the adapter to the outside, a bending arrangement of the tabs enhances their structural strength, improving the problem of degradation in internal electrical connection performance of the battery due to damage to the tabs by an external force, and thus improving the battery performance.

## Description

### FIELD

This application relates to the field of battery technologies, and in particular, to a battery cell, a battery, an electricity consuming device and a preparation method.

### BACKGROUND

Energy saving and emission reduction are crucial to the sustainable development of the automobile industry, and electric vehicles, with their advantages in energy saving and environmental protection, have become an important part of the sustainable development of the automobile industry. For electric vehicles, battery technology is an important factor in connection with their development.

Pouch-type batteries have been attracting attention for their large battery capacity and high safety, but the performance of pouch-type batteries still needs to be improved.

### SUMMARY

This application provides a battery cell, a battery, an electricity consuming device, and a preparation method to improve the problem of degradation in internal electrical connection performance of the battery due to damage to tabs, thus improving battery performance.

In a first aspect, this application provides a battery cell including an electrode assembly which includes at least two electrode bodies arranged side by side along a first direction and tabs extending from the electrode bodies, the tab including an extension portion and a bent portion connected with each other, the extension portion extending from the electrode body along a second direction, the bent portion being connected with an end of the extension portion away from the electrode body and extending along the first direction, and the second direction intersecting with the first direction; and the battery cell includes an adapter which includes a connecting portion and a conducting portion, the connecting portion extending along the first direction and being connected with at least two bent portions of the electrode assembly, and the conducting portion being disposed on a side of the connecting portion away from the tab and extending along the second direction.

In the solution of the embodiment of this application, an electrode assembly includes at least two electrode bodies, and a plurality of electrode bodies improve electrical capacity of the battery cell; the tab includes an extension portion and a bent portion, the extension portion extends from the electrode body along a second direction, the bent portion is connected with an end of the extension portion away from the electrode body and extends along a first direction, an adapter is connected with the tabs, the current of the electrode body is conducted by the adapter to the outside, a bending arrangement of the tabs enhances their structural strength, thus improving the problem of degradation in internal electrical connection performance of the battery due to damage to the tabs by an external force, and thus improving the battery performance.

In some embodiments, the bent portion is connected with a surface of the connecting portion facing the electrode body.

In the above solution, the bent portion is connected with a surface of the connecting portion facing the electrode body, which prevents the connecting portion from scratching or hurting the tabs, improving the safety of the battery.

In some embodiments, the connecting portion includes at least two sub-connecting portions along the first direction, and each of the sub-connecting portions is connected with at least one bent portion.

In the above solution, the connecting portion includes at least two sub-connecting portions along the first direction, and each of the sub-connecting portions is connected with at least one bent portion, so the current paths between respective tabs and the connecting portion are balanced, which reduces the difference in internal resistances among respective portions, improving the battery performance.

In some embodiments, the conducting portion is connected with a middle portion of the connecting portion along the first direction, and the at least two sub-connecting portions are located at two sides of the conducting portion.

In the above solution, the conducting portion is connected with a middle portion of the connecting portion along the first direction, so the current paths from respective portions of the connecting portion to the conducting portion are balanced, which reduces the difference in internal resistances of respective portions, improving the battery performance.

In some embodiments, in the second direction, a thickness of the bent portion is T1, a thickness of the connecting portion is T2, and 1≤T2/T1≤4.

In the above solution, a thickness of the bent portion is T1, a thickness of the connecting portion is T2, and 1≤T2/T1≤4, thus improving the problem of low volumetric energy density of the battery caused by the fact that the connecting portion occupies much space inside the battery due to an excessive thickness of the connecting portion and the problem that the mass energy density of the battery is low and the connecting portion crushes the tabs due to an excessive weight of the connection portion, and also improving the problem of degradation in battery performance caused by a poor current flow capacity of the connecting portion and severe heat generation of the battery due to an excessive thinness of the connecting portion.

In some embodiments, a support which is disposed at at least one end of the electrode assembly in the first direction and sleeved on an outer periphery of the conducting portion is included.

In the above solution, the support is sleeved on the conducting portion, which enhances the strength of the conducting portion area of the battery cell, improving the safety performance of the battery.

In some embodiments, the support includes an aperture penetrated along the second direction, and the conducting portion protrudes out through the aperture.

In the above solution, the support includes an aperture penetrating therethrough along the second direction, and the conducting portion protrudes out through the aperture to conduct the current generated by respective electrode bodies to the outside, and the aperture also functions as a support and a stop.

In some embodiments, in the first direction, a width of the aperture is T3, a width of the conducting portion is T4, and 1<T3/T4<3.

In the above solution, a width of the aperture is T3, a width of the conducting portion is T4, and 1<T3/T4<3, thus improving the problem of degradation in the battery performance is caused by the fact that limitations of the aperture on the conducting portion are poor and the conducting portion shakes under an external force due to the too wide aperture, and also improving the problem that the conducting portion is crushed and may not be passed through due to the too narrow aperture.

In some embodiments, the support includes a top wall and a side wall connected with a periphery of the top wall, the top wall and the side wall are connected with each other to form an accommodating cavity that is open toward the electrode body, the connecting portion is located in the accommodating cavity, and the aperture is disposed on the top wall.

In the above solution, the support includes a top wall and a side wall connected with a periphery of the top wall, the top wall and the side wall are connected with each other to form an accommodating cavity that is open toward the electrode body, and the accommodating cavity reduces the weight of the support. The connecting portion is located in the accommodating cavity, and the accommodating cavity functions to protect the tabs and the adapters, improving the safety performance of the battery.

In some embodiments, the support includes protrusions which are disposed at two ends of the support along a third direction, protrude from the side wall toward the electrode body and abut against the electrode body, and the third direction intersects with the first direction and the second direction.

In the above solution, the protrusions protrude from the side wall toward the electrode body and abut against the electrode body, which functions to fix the electrode body, improving the safety performance of the battery.

In some embodiments, the support further includes a groove disposed at an end of the support facing the electrode body along the second direction and configured to avoid the tabs.

In the above solution, the groove is disposed at an end of the support facing the electrode body along the second direction and configured to avoid the tabs, which can reduce the risk of crushing the tabs by the support.

In some embodiments, the support includes supporting ribs disposed in the accommodating cavity, a plurality of supporting ribs are spaced apart along the third direction and disposed at two sides of the conducting portion separately.

In the above solution, a plurality of supporting ribs are disposed at two sides of the conducting portion separately, and the supporting ribs function to fix the conducting portion, thus improving the problem of degradation in battery performance due to shaking, bending, deformation, or the like of the conducting portion by an external force.

In some embodiments, a separator which is disposed between the bent portion and the electrode body is included.

In the above solution, the separator is disposed between the bent portion and the electrode body, and the separator insulates the bent portion from the electrode body, which also reduces the risk of a short circuit due to insertion of the tabs into the electrode body by an external force.

In some embodiments, at least part of a surface of the separator abuts against the bent portion.

In the above solution, at least part of a surface of the separator abuts against the bent portion, and the separator functions to support the bent portion, which further reduces the risk of a short circuit due to insertion of the tabs into the electrode body by an external force.

In some embodiments, in the second direction, a projection of the connecting portion is within a projection of the separator.

In the above solution, in the second direction, a projection of the connecting portion is within a projection of the separator, and therefore the separator functions to insulate the connecting portion from the electrode body, thus improving the problem of a short circuit of the battery caused by an accidental conduction between the connecting portion and the electrode body.

In some embodiments, a surface of the separator facing the electrode body and the electrode body are adapted in shape and abut against each other.

In the above solution, a surface of the separator facing the electrode body and the electrode body are adapted in shape and abut against each other, so the separator will not easily fall off, thus improving the assembly efficiency.

In some embodiments, in the second direction, the tabs protrude from two ends of the electrode body, and the supports are disposed at two ends of the electrode assembly in the second direction.

In some embodiments, the electrode assembly includes N electrode bodies arranged along the first direction, N is an even number, and the bent portions of 2/N of the tabs extend toward the bent portions of the other 2/N of the tabs.

In the above solution, the electrode assembly includes N electrode bodies arranged along the first direction, N is an even number, and the bent portions of 2/N of the tabs extend toward the bent portions of the other 2/N of the tabs, and the bent portions extending toward each other reduces the difficulty of closing up the tabs, thus improving the welding reliability between the bent portion and the connecting portion and the battery performance.

In some embodiments, a casing is further included, the casing is an enveloping film which covers an outer side of the electrode assembly, the casing is disposed with an opening through which the conducting portion protrudes out, and the casing and the conducting portion are sealingly connected.

In the above solution, the casing is an enveloping film which covers an outer side of the electrode assembly, the casing functions to protect and accommodate the electrode assembly, and the casing and the conducting portion are sealingly connected, which reduces the risk of electrolyte leakage in an conducting portion area.

In some embodiments, in the first direction, a thickness of the support is T5, a thickness of the electrode assembly is T6, and 1/3≤T5/T6≤1.

In the above solution, a thickness of the support is T5, a thickness of the electrode assembly is T6, and 1/3≤T5/T6≤1, so respective portions of the battery cell transition smoothly in thickness, thus improving the problem that the casing is subjected to tensile breaks, which is caused by great difference between thicknesses of the support and the electrode assembly.

In some embodiments, the support is made of an insulation material.

In the above solution, the support is made of an insulation material for insulating the support from the electrode assembly, thus improving the safety performance of the battery.

In some embodiments, the conducting portion is configured to conduct electric power of the electrode body to the outside.

In a second aspect, an embodiment of this application provides a battery including a plurality of battery cells in any one embodiment of the first aspect.

In a third aspect, an embodiment of this application provides an electricity consuming device including the battery in the second aspect, and the battery is configured to supply electric power.

In a fourth aspect, an embodiment of this application provides a preparation method for preparing the battery cell in any one embodiment of the first aspect above, including:
bending a bent portion of the battery cell toward a first direction; and
connecting a connecting portion of an adapter with the bent portion.

In the above solution, the bending arrangement of the bent portion enhances the structural strength of the tabs, improving the problem of degradation in internal electrical connection performance of the battery due to damage of the tabs by an external force, and thus improving the battery performance.

In some embodiments, the preparation method further includes sleeving a support on an outer side of the adapter.

In the above solution, the support is sleeved on an outside of the adapter, which enhances the strength of an adapter area of the battery cell, improving the safety performance of the battery.

### BRIEF DESCRIPTION OF THE DRAWINGS

To describe the technical solutions in the embodiments of this application more clearly, the following outlines the drawings used in the embodiments of this application, it is obvious that the drawings outlined below are merely a part of embodiments of this application, and a person of ordinary skill in the art may derive other drawings from the outlined drawings without making any creative efforts.
Fig. 1 is a schematic structural view of a vehicle provided by an embodiment of this application;
Fig.2 is a schematic structural view of a battery pack provided by an embodiment of this application;
Fig.3 is a schematic structural view of a battery module provided by an embodiment of this application;
Fig.4 is an exploded structural schematic view of a cell battery provided by an embodiment of this application;
Fig. 5 is a side view of a battery cell provided by an embodiment of this application;
Fig.6 is an enlarged structural schematic view of a portion A in Fig.5;
Fig.7 is a schematic structural view of an adapter of a battery cell provided by an embodiment of this application;
Fig. 8 is an exploded view of a battery cell provided by an embodiment of this application;
Fig.9 is a front view of a support of a battery cell provided by an embodiment of this application;
Fig.10 is a schematic structural view of a support of a battery cell provided by an embodiment of this application;
Fig.11 is a schematic structural view of a support of a battery cell provided by an embodiment of this application;
Fig. 12 is a side view of a support of a battery cell provided by an embodiment of this application;
Fig. 13 is a cross-sectional view at a portion B-B in Fig.12;
Fig. 14 is a schematic view of an enlarged structure of a portion A in Fig. 5;
Fig. 15 is a front view of a battery cell provided by an embodiment of this application;
Fig. 16 is a front view of a battery cell provided by another embodiment of this application;
Fig. 17 is a schematic structural view of a battery cell provided by an embodiment of this application;
Fig. 18 is a side view of a support of a battery cell provided by an embodiment of this application; and
Fig. 19 is a flowchart of a method for preparing a battery cell provided by an embodiment of this application.

The reference numerals in the detailed embodiment are as follows:
1 vehicle, 2 battery, 101 motor, 102 controller, 202 box, 2021 first box portion, 2022 second box portion, 201 battery module;
3 battery cell, 31 electrode assembly, 32 adapter, 33 electrode body, 34 tab, 341 extension portion, 342 bent portion, 321 connecting portion, 322 conducting portion, 35 support, 351 aperture, 352 accommodating cavity, 353 top wall, 354 side wall, 355 protrusion, 356 abutment plate, 357 groove, 36 supporting rib, 361 accommodating groove, 37 separator, 38 casing.

In the drawings, the drawings are not drawn to actual scale.

### DETAILED DESCRIPTION

To make the objectives, technical solutions, and advantages of the embodiments of this application clearer, the following gives a clear description of the technical solutions in the embodiments of this application with reference to the drawings in the embodiments of this application, evidently, the described embodiments are merely a part of but not all of the embodiments of this application, and all other embodiments derived by a person of ordinary skill in the art based on the embodiments of this application without making any creative efforts fall within the protection scope of this application.

Unless otherwise defined, all technical and scientific terms used herein have the same meanings as commonly understood by a person skilled in the technical field of this application; the terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense, for example, a "connection" may be a fixed connection, a detachable connection, or an integrated connection; or may be a direct connection or an indirect connection implemented through an intermediary, or may be internal communication between two elements. A person of ordinary skill in the art understands the specific meanings of the terms in this application according to the context.

The term "and/or" in this application indicates merely a relation for describing the related items, and represents three possible relationships, for example, "A and/or B" may represent the following three circumstances: A alone, both A and B, and B alone. In addition, the character "/" herein generally indicates an "or" relationship between the item preceding the character and the item following the character.

In embodiments of this application, the same reference numeral denotes the same component, and for brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

"A plurality of" referred to in this application means two or more (including two).

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, and the embodiments of this application do not limit the type of the battery cell. The battery cell may be in various shapes such as a cylinder, flat body, or cuboid, without being limited in embodiments of this application.

The battery mentioned in embodiments of this application means a single physical module that includes one or more battery cells to provide a higher voltage and a higher capacity. For example, the battery mentioned in this application may include a battery module, a battery pack, or the like. A battery typically includes a box configured to package one or more battery cells. The box can prevent liquid or other foreign matters from affecting the charging or discharging of the battery cells.

A battery cell includes an electrode assembly and an electrolyte, and the electrode assembly includes a positive electrode plate, a negative electrode plate, and a separator. The battery cell operates primarily relying on metal ions shuttling between the positive electrode plate and the negative electrode plate. The positive electrode plate includes a positive electrode current collector and a positive electrode active material layer which is applied onto a surface of the positive electrode current collector; the positive electrode current collector includes a positive electrode current collecting portion coated with the positive electrode active material layer, and a positive electrode tab connected with the positive electrode current collecting portion, and uncoated with the positive electrode active material layer. Taking a lithium-ion battery as an example, the positive electrode current collector may be made of aluminum, and the positive electrode active material layer includes a positive electrode active material, which may be lithium cobalt oxide, lithium iron phosphate, ternary lithium, lithium manganese oxide, or the like. The negative electrode plate includes a negative electrode current collector and a negative electrode active material layer which is applied onto a surface of the negative electrode current collector; the negative electrode current collector includes a negative electrode current collecting portion coated with the negative electrode active material layer, and a negative electrode tab connected with the negative electrode current collecting portion and uncoated with the negative electrode active material layer. The negative electrode current collector may be made of copper. The negative electrode active material layer includes a negative electrode active material which may be carbon, silicon, or the like. The separator may be made of a material such as PP (polypropylene, polypropylene) or PE (polyethylene, polyethylene).

Energy saving and emission reduction are crucial to the sustainable development of the automobile industry, and electric vehicles, with their advantages in energy saving and environmental protection, have become an important part of the sustainable development of the automobile industry. For electric vehicles, battery technology is an important factor in connection with their development. Pouch-type batteries have been attracting attention for their good safety performance, light weight, large capacity and low internal resistance.

The inventors noticed that after pouch-type battery cells are assembled into a battery, the battery often fails to achieve the designed performance.

In order to improve the battery performance, the inventors researched and found that during manufacturing and transporting the battery, under an external force, tabs of the pouch-type battery cells are easily tore due to their extension along a length direction and thinness, resulting in degradation in performance or failure of the battery.

Based on the above problems found by the inventors, the inventors improved the pouch-type battery cells. The inventors includes designed a pouch-type battery cell including an electrode assembly and an adapter, the electrode assembly includes at least two electrode bodies arranged side by side along a first direction and tabs extending from the electrode bodies, the tab includes an extension portion and a bent portion, the extension portion extends from the electrode body along the second direction, the bent portion is connected with an end of the extension portion away from the electrode body and extends along the first direction, the adapter is connected with the tab, the current of the electrode body is conducted by the adapter to the outside, and bending of the tabs enhances the structural strength of the tabs, improving the problem of degradation in electrical connection performance of the tab due to damage to the tabs by an external force, and thus improving the battery performance.

The electricity consuming device may be a vehicle, a mobile phone, a portable device, a notebook computer, a ship, a spacecraft, an electric toy, an electric tool, or the like. The vehicle may be an oil-fueled vehicle, a natural gas vehicle, or a new energy vehicle which may be a pure electric vehicle, a hybrid electric vehicle, a range-extended electric vehicle, or the like; the spacecraft includes an airplane, a rocket, a space shuttle, a spaceship, and the like; the electric toy includes a fixed or mobile electric toy, such as a game console, an electric car toy, an electric ship toy, an electric airplane toy, and the like; the electric tool includes an electrical metal cutting tool, an electrical grinding tool, an electrical assembling tool, and a power tool for use in railways, and examples of the power tool are an electrical drill, an electrical grinder, an electrical wrench, an electrical screwdriver, an electrical hammer, an electrical impact drill, a concrete vibrator, an electrical planer, and the like. The electricity consuming device is not particularly limited in embodiments of this application.

It should be understood that the technical solutions described in the embodiments of this application can not only be applied to the batteries and electrical consuming devices described above, but may also be applied to all batteries including boxs and electricity consuming devices using batteries. However, for the sake of brevity, the following embodiments are all described by taking an electric vehicle as an example.

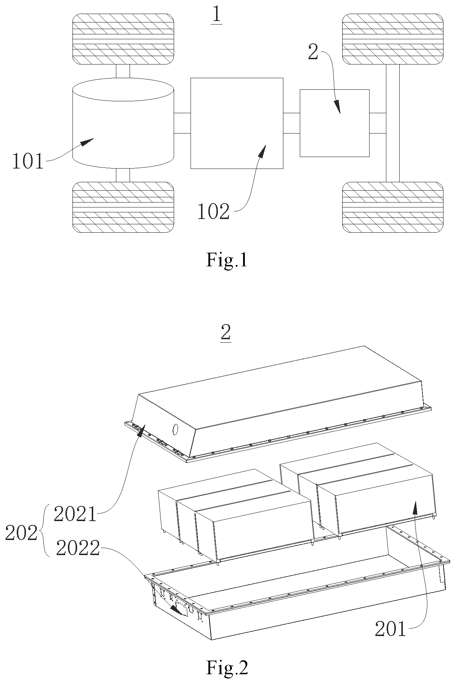

As shown in Fig. 1, Fig. 1 is a schematic structural view of a vehicle 1 provided by some embodiments of this application. The vehicle 1 may be an oil- fueled vehicle, a natural gas vehicle or a new energy vehicle, and the new energy vehicle may be a pure electric vehicle, a hybrid electric vehicle, a range-extended vehicle, etc. A battery 2 is provided inside the vehicle 1 and may be disposed in the bottom, the front or the rear of the vehicle 1. The battery 2 may be used for power supply of the vehicle 1, for example, the battery 2 can serve as an operating power supply of the vehicle 1. The vehicle 1 may also include a controller 102 and a motor 101, and the controller 102 is configured for controlling the battery to supply power to the motor 101, for example, for operation electricity requirements during start-up, navigation and driving of the vehicle 1.

In some embodiments of this application, the battery may not only serve as the operating power supply of the vehicle 1, but also serve as a driving power supply for the vehicle 1 to provide driving power for the vehicle 1 in place of or partly in place of oil or natural gas.

In order to satisfy different requirements on electricity consuming, the battery 2 may include a plurality of battery cells which refer to the smallest units forming a battery module or a battery pack. The plurality of battery cells may be connected with one another in series and/or parallel for various applications. The battery 2 mentioned in this application includes a battery module or a battery pack. The plurality of battery cells may be connected with one another in series, parallel or hybrid, and the connection in hybrid means a combination of series connection and parallel connection. In embodiments of this application, the plurality of battery cells may directly form the battery pack, or may first form the battery module and then the battery modules form a battery pack.

Fig.2 shows a schematic structural view of a battery 2 according to an embodiment of this application.

As shown in Fig.2, the battery includes a box 202 and battery cells (not shown in the drawings) which are accommodated in the box 202.

The box 202 may be in a simple three-dimensional structure such as a single cuboid, a cylinder and a sphere, or in a complex three-dimensional structure composed of a simple three-dimensional structure such as a cuboid, a cylinder and a sphere. The box 202 may be made of an alloy material such as aluminum alloy and iron alloy, a polymer material such as polycarbonate and polyisocyanurate foams, or a composite material such as material composed of glass fiber and epoxy resin.

The box 202 is configured to accommodate the battery cell and may be in one of various structures. In some embodiments, the box 202 may include a first box portion 2021 and a second box portion 2022 which fit and cover each other and together define an accommodation space configured to accommodate the battery cells 3. The second box portion 2022 may be a hollow structure that is open at one end, the first box portion 2021 is a plate-shaped structure, and the first box portion 2021 fits and covers the opening of the second box portion 2022 to form the box 202 that includes the accommodation space; the first box portion 2021 and the second box portion 2022 each may be a hollow structure that is open at one end, the opening of the first box portion 2021 fits and covers the opening of the second box portion 2022 to form the box that includes the accommodation space. Definitely, the first box portion 2021 and the second box portion 2022 may be in various shapes, such as a cylinder and a cuboid.

To improve the airtightness between the first box portion 2021 and the second box portion 2022 that are connected, a sealing element such as a sealant or a sealing ring may be disposed between the first box portion 2021 and the second box portion 2022.

Assuming that the first box portion 2021 fits on the top of the second box portion 2022, the first box portion 2021 may also be referred to as an upper box, and the second box portion 2022 may also be referred to as a lower box.

There may be one or more battery cells in the battery 2. If there are a plurality of battery cells, the plurality of battery cells may be connected in series, parallel or hybrid. The connection in hybrid means a combination of series connection and parallel connection of the plurality of battery cells. The plurality of battery cells may be directly connected in series, parallel or hybrid, and then the whole of the plurality of battery cells may be accommodated in the box 202; definitely, the plurality of battery cells may be connected in series, parallel or hybrid to form a battery module 201, and then the plurality of battery modules 201 are connected in series, parallel or hybrid to form a whole for being accommodated in the box 202.

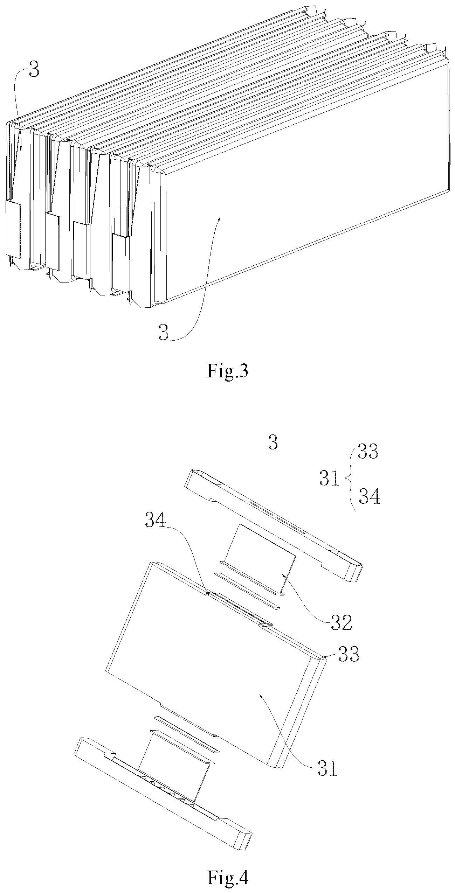

Fig.3 shows a schematic structural view of a battery module according to an embodiment of this application.

In some embodiments, as shown in Figs.2 and 3, there are a plurality of battery cells 3 which are connected in series, parallel, or hybrid to form a battery module 201 first. The plurality of battery modules 201 are then connected in series, parallel or hybrid to form a whole for being accommodated in the box 202.

The plurality of battery cells 3 in the battery module 201 may be electrically connected by a busbar component, so as to implement parallel connection, series connection or series-parallel connection among the plurality of battery cells 3 in the battery module 201.

In this application, the battery cell 3 may include a lithium-ion battery cell 3, a sodium-ion battery cell 3, a magnesium-ion battery cell 3, or the like, without being limited in embodiments of this application. The battery cell 3 may be in a cylindrical shape, a flat shape, a cuboid shape or other shapes, without being limited in embodiments of this application. Depending on the form of packaging, the battery cell 3 is typically classed into three types: a cylindrical battery cell, a prismatic battery cell and a pouch-type battery cell (also referred to as a soft pack battery cell, and the battery cells in the embodiments of this application refer to pouch-type battery cells, or are in a series of products corresponding to pouch-type battery cells.

Fig.4 is a schematic structural view of a battery cell 3 provided by some embodiments of this application. The battery cell 3 refers to a minimum unit for making up a battery.

An electrode assembly 31 is a component that reacts electrochemically in the battery cell 3. Each battery cell 3 may include one or more electrode assemblies 31. The electrode assembly 31 is mainly formed by winding or stacking electrode plates which are classed into a positive electrode plate and a negative electrode plate, and an isolating component is usually disposed between the positive electrode plate and the negative electrode plate. Portions of the positive electrode plate and the negative electrode plate with an active material each constitutes the electrode bodies 33, and portions of the positive electrode plate and the negative electrode plate without an active material constitute the tabs 34 each constitutes the electrode tabs 34. The positive electrode tab and the negative electrode tab may be both located at one end of the electrode body 33 or at two ends of the electrode body 33 separately. During charging and discharging of the battery, the positive electrode active material and the negative electrode active material react with the electrolyte, and the current generated in the electrode assembly 31 is conducted by the tabs 34 to the outside.

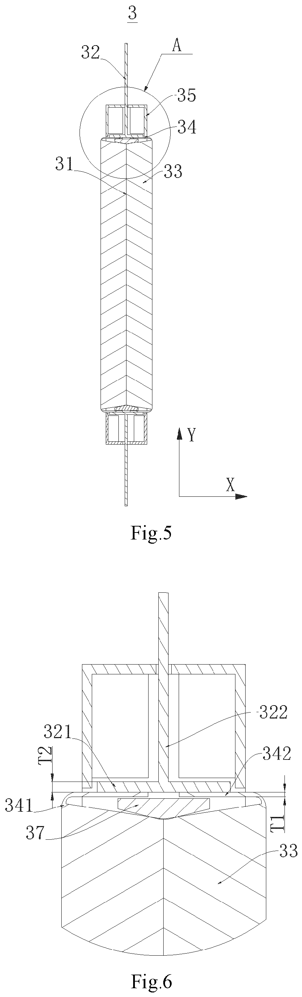

As shown in Figs. 5 and 6, Fig. 5 is a side view of a battery cell 3 provided by an embodiment of this application, and Fig.6 is an enlarged structural schematic view of a portion A in Fig. 5.

As shown in Figs. 5 and 6, the battery cells 3 in the embodiments of this application includes an electrode assembly 31 and an adapter 32, the electrode assembly 31 includes at least two electrode bodies 33 arranged side by side along a first direction X and tabs 34 extending from the electrode bodies 33, the tabs 34 include an extension portion 341 and a bent portion 342 connected with each other, the extension portion 341 extends from the electrode body 33 along a second direction Y, the bent portion 342 is connected with an end of the extension portion 341 away from the electrode body 33 and extends along the first direction X, and the second direction Y intersects with the first direction X; the adapter 32 includes a connecting portion 321 and a conducting portion 322, the connecting portion 321 extends along the first direction X and is connected with at least two bent portions 342 of the electrode assembly 31, and the conducting portion 322 is disposed on a side of the connecting portion 321 away from the tabs 34 and extends along the second direction Y

Portions of a positive electrode plate and a negative electrode plate with an active material constitute the electrode bodies 33, and the tabs 34 are connected with the electrode bodies 33 to conduct the current from the electrode bodies 33 to the outside, and include a plurality of tab pieces extending along the second direction Y, which are gathered together. The tab pieces which are gathered together form the tabs 34, which include an extension portion 341 that is a portion still extending along the second direction Y after gathering-together, and another portion referred to as a bent portion 342. Optionally, the arrangement of the electrode bodies 33 in the electrode assembly 31 of the battery cell 3 in the embodiments of this application is not limited to the side by side arrangement along the first direction X, and the plurality of electrode bodies 33 may also be arranged in an array along the first direction X and the second direction.

Optionally, the tabs 34 may be positive electrode tabs or negative electrode tabs, and the positive electrode tabs and the negative electrode tabs are not connected with the same adapter 32.

Optionally, in the same battery cell 3, extension distances of the respective extension portions 341 in the second direction Y are the same, and extension distances of the respective bent portions 341 in the first direction X are the same, which ensures that the current paths of the electrode bodies 33 are similar, thus improving the battery performance.

Optionally, the connecting portion 321 and the conducting portion 322 are integrally formed or welded to each other.

Optionally, in the first direction X, the two bent portions 342 extend toward each other, and a surface of the bent portion 342 facing the electrode body 33 is connected with a surface of the connecting portion 321 away from the electrode body 33, which reduces an internal space of the battery occupied by the connecting portion 321, increasing the energy density of the battery.

Optionally, the connecting portion 321 is welded to the bent portion 342, and the welding process may be laser welding, microwave welding, friction welding, etc.

Optionally, the connecting portion 321 and the bent portion 342 are made of the same material, which reduces welding difficulty of the connecting portion 321 and the bent portion 342.

In a solution of an embodiment of this application, the electrode assembly 31 includes at least two electrode bodies 33, and a plurality of electrode bodies 33 increase the electric capacity of the battery cell 3; the tab 34 includes an extension portion 341 and a bent portion 342 connected with each other, the extension portion 341 extends from the electrode body 33 along the second direction Y, the bent portion 342 is connected with an end of the extension portion 342 away from the electrode body 33 and extends along the first direction X, the adapter 32 is connected with the tab 34, the current of the electrode body 33 is conducted by the adapter 32 to the outside, and the bending of the tab 34 enhances the structural strength of the tab 34, improving the problem of degradation in internal electrical connection performance of the battery due to damage by an external force, and thus improving the battery performance.

In some embodiments, as shown in Figs.5 and 6, the bent portion 342 is connected with a surface of the connecting portion 321 facing the electrode body 33.

Optionally, a corner of the connecting portion 321 is rounded, thus improving the problem that the tab 34 is hurt by the connecting portion 321.

In the embodiments, the bent portion 342 is connected with a surface of the connecting portion 321 facing the electrode body 33, which prevents the connecting portion 321 from scratching or hurting the tab 34, improving the safety of the battery.

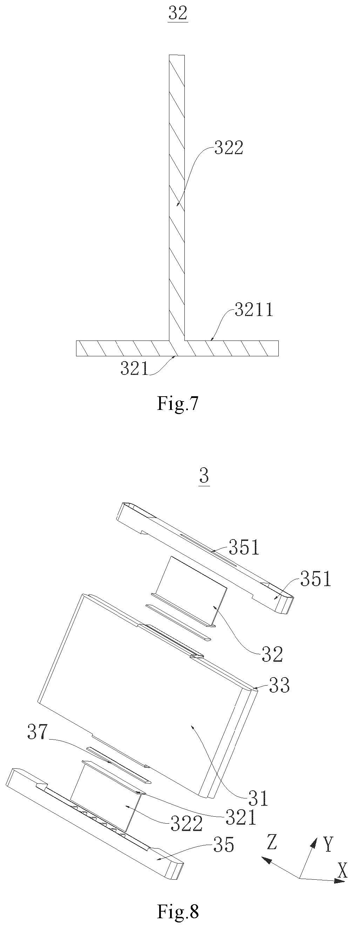

As shown in Fig.7, Fig.7 is a schematic structural view of an adapter 32 of a battery cell provided by an embodiment of this application.

In some embodiments, as shown in Figs.6 and 7, the connecting portion 321 includes at least two sub-connecting portions 3211 along the first direction X, and each sub-connecting portion 3211 is connected with at least one bent portion 342.

Optionally, the sub-connecting portion 3211 each have the same shape and size.

Optionally, in the first direction X, two sub-connecting portions 3211 are symmetrically disposed on the connecting portion 321.

Optionally, along the first direction X, a plurality of sub -connecting portions 3211 are arranged at equal intervals on the connecting portion 321.

In these embodiments, the connecting portion 321 includes at least two sub-connecting portions 3211 along the first direction X, and each of the sub-connecting portions 3211 is connected with at least one bent portion 342, so the current paths between respective tabs 34 and the connecting portion 321 are balanced, which reduces the difference of internal resistances of respective portions, thus improving the battery performance.

In some embodiments, as shown in Fig.7, the conducting portion 322 is connected with a middle portion of the connecting portion 321 along the first direction X, and the at least two sub-connecting portions 3211 are located at two sides of the conducting portion 322.

The connection of the conducting portion 322 with a middle portion of the connecting portion 321 along the first direction X means that in the first direction X, the connecting portion 321 is symmetrically disposed with respect to a area where the conducting portion 322 is connected with the connecting portion 321.

Optionally, in the first direction X, the distances from the at least two sub-connecting portions 3211 to the conducting portion 322 are equal.

In these embodiments, the conducting portion 322 is connected with a middle portion of the connecting portion 321 along the first direction X, so the current paths from respective portions of the connecting portion 321 to the conducting portion 322 are balanced, which reduces the difference in internal resistances of the respective portions, thus improving the battery performance.

In some embodiments, as shown in Figs.6 and 7, in the second direction Y, a thickness of the bent portion 342 is T1, a thickness of the connecting portion 321 is T2, and 1≤T2/T1≤4.

In these embodiments, a thickness of the bent portion 342 is T1, a thickness of the connecting portion 321 is T2, and 1≤T2/T1≤4, thus improving the problem of low volumetric energy density of the battery caused by the fact that the connecting portion is too heavy and occupies much space inside the battery due to an excessive thickness of the connecting portion 321 and the problem of degradation in battery performance caused by a poor current flow capacity of the connecting portion 321 and severe heat generation of the battery due to an excessive thinness of the connecting portion 321.

As shown in Fig. 8, Fig. 8 is an exploded view of a battery cell 3 provided by an embodiment of this application.

In some embodiments, as shown in Fig.8, the battery cell 3 further includes a support 35 which is disposed at at least one end of the electrode assembly 31 in the first direction X and sleeved on an outer periphery of the conducting portion 322.

Optionally, the support 35 is a solid cube, and the solid cube support 35 can effectively enhance the strength of the conducting portion 322 area.

In these embodiments, the support 35 is sleeved on the conducting portion 322, which enhances the strength of the conducting portion 322 area of the battery cell 3, improving the safety performance of the battery.

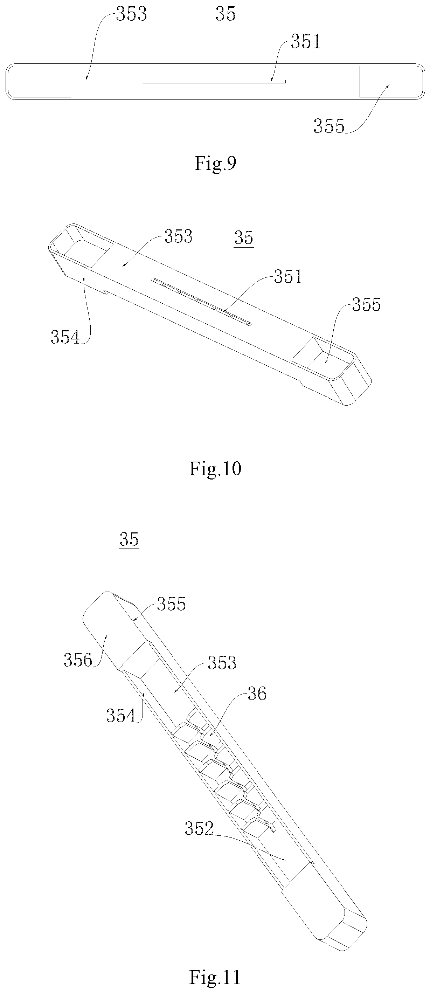

As shown in Figs. 9 and 10, Fig. 9 is a front view of a support 35 of a battery cell 3 provided by an embodiment of this application, and Fig. 10 is a schematic structural view of a support 35 of a battery cell 3 provided by an embodiment of this application.

In some embodiments, as shown in Figs.8 to 10, the support 35 includes an aperture 351 penetrated along the second direction Y, and the conducting portion 322 protrudes out through the aperture 351.

Optionally, in the second direction Y, the shape of a cross section of the aperture 351 is the same as the shape of a cross section of the conducting portion 322.

In these embodiments, the support 35 includes an aperture 351 penetrated along the second direction Y, and the conducting portion 322 protrudes out through the aperture 351, so the current generated by the respective electrode bodies 33 is conducted to the outside and the aperture 351 also functions on the conducting portion 322 as a support and a stop.

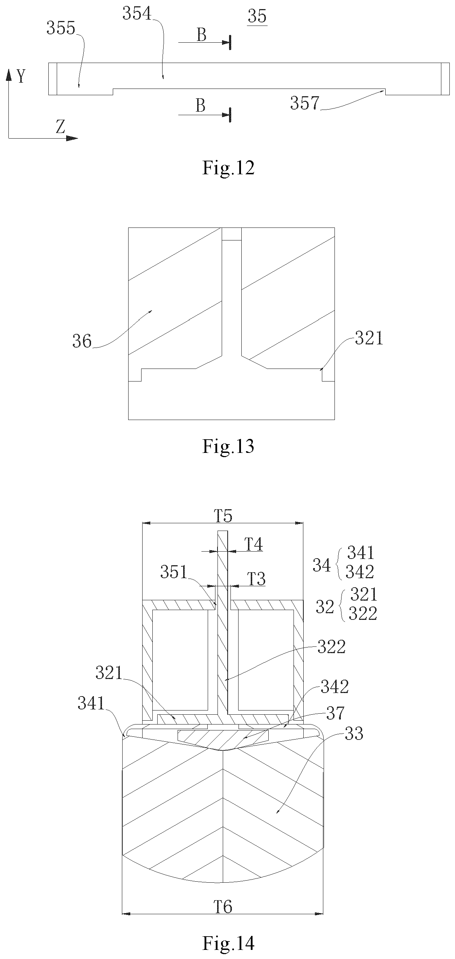

As shown in Figs. 11, 12, 13 and 14, Fig. 11 is a schematic structural view of a support 35 of a battery cell provided by an embodiment of this application, Fig.12 is a side view of a support 35 of a battery cell provided by an embodiment of this application, Fig. 13 is a cross-sectional view of a portion B-B in Fig. 12, and Fig. 14 is an enlarged structural schematic view of a portion A in Fig.5.

In some embodiments, as shown in Figs. 11 to 14, in the first direction X, a width of the aperture 351 is T3, a width of the conducting portion 322 is T4, and 1<T3/T4<3.

In these embodiments, a width of the aperture 351 is T3, a width of the conducting portion 322 is T4, and 1<T3/T4<3, thus improving the problem of degradation in the battery performance caused the fact that limitations of the aperture 351 on the conducting portion 322 are poor and the conducting portion 322 shakes under an external force due to the too wide aperture 351 and also improving the problem that the conducting portion 322 is crushed or may not be passed through due to the too narrow aperture 351.

In some embodiments, as shown in Figs. 11 to 14, the support 35 includes a top wall 353 and a side wall 354 connected with a periphery of the top wall 353, the top wall 353 and the side wall 354 are connected with each other to form an accommodating cavity 352 that is open toward the electrode body 33, the connecting portion 321 is located in the accommodating cavity 352, and the aperture 351 is disposed on the top wall 353.

Optionally, the top wall 353 and the side wall 354 are integrally formed.

Optionally, the top wall 353 abuts against the connecting portion 321, and the support 35 functions to fix the connecting portion 321.

Optionally, in the second direction Y, the aperture 351 is penetrated through the top wall 353.

In these embodiments, the support 35 includes a top wall 353 and a side wall 354 connected with a periphery of the top wall 353, and the top wall 353 and the side wall 354 are connected with each other to form an accommodating cavity 352 that is open toward the electrode body 33, the arrangement of the accommodating cavity 352 reduces the weight of the support 35, the connecting portion 321 is located in the accommodating cavity 352 which functions to protect the tabs 34 and the adapter 32, improving the safety performance of the battery.

In some embodiments, as shown in Figs. 12 to 14, the support 35 includes protrusions 355 disposed at two ends of the support along a third direction Z, the protrusions 355 protrude from the side wall 354 toward the electrode body 33 and abut against the electrode body 33, and the third direction Z intersects with the first direction X and the second direction Y

Optionally, in the third direction Z, the protrusions 355 at two ends of the support 35 have the same shape.

Optionally, the protrusion 355 and the side wall 354 are integrally formed, and optionally are made of the same material.

Optionally, an abutment plate 356 is connected with the protrusion 355 on a side of the protrusion 355 facing the electrode body 33, a surface of the abutment plate 356 facing the electrode body 33 is a plane, and the abutment plate 356 abuts against the electrode body 33, so the contact area between the protrusion 355 and the electrode body 33 is increased, thus improving the problem of hurting the electrode body 33 caused by stress concentration due to a small contact area between the protrusion 355 and the electrode body 33.

Optionally, the abutment plate 356 and the side wall 354 are made of the same material.

In these embodiments, the protrusions 355 protrude from the side wall 354 toward the electrode body 33 and abut against the electrode body 33, which functions to fix the electrode body 33, improving the safety performance of the battery.

In some embodiments, as shown in Figs. 12 to 14, the support 35 further includes a groove 357 which is disposed at an end of the support 35 facing the electrode body 33 along the second direction Y and which is configured to avoid the tabs 34.

Optionally, in the second direction Y, the groove 357 is recessed from the side wall 354 toward a side away from the electrode body 33, and/or the groove 357 is defined by the side wall 354 and the protrusions 355.

Optionally, in the second direction Y, a depth of the groove 357 is not less than a height of the tab 34; in the third direction Z, a length of the groove 357 is not less than a length of the tab 34.

Optionally, the groove 357 abuts against a side of the bent portion 342 of the tab 34 away from the electrode body 33, and the groove 357 functions to abut against the tab 34.

In these embodiments, the groove 357 is disposed at one end of the support 35 facing the electrode body 33 along the second direction Y and configured to avoid the tabs 34, which prevents the tab 34 from being crushed by the support 35.

In some embodiments, as shown in Figs. 11 to 14, the support 35 includes supporting ribs 36 which are disposed in the accommodating cavity 352, and the plurality of supporting ribs 36 are spaced apart along the third direction Z and disposed at two sides of the conducting portion 322 separately.

Optionally, the supporting ribs 36 are disposed at two sides of the conducting portion 322 and abut against the conducting portion 322.

Optionally, corners of the supporting ribs 36 are all rounded, thus improving the problem that the conducting portion 322 are hurt or crushed by the supporting ribs 36.

Optionally, in the second direction Y, an accommodating groove 361 is disposed at a side of the supporting ribs 36 close to the electrode body 33, abuts against the connecting portion 321 and accommodates at least part of the connecting portion 321 which functions to fix and limit the position of the connecting portion 321.

Optionally, the supporting ribs 36 is a column extending along the first direction X, and in the first direction X, one or two ends of the supporting ribs 36 are connected with the side wall 354.

Optionally, the supporting rib 36 and the side wall 354 are made of the same material.

In these embodiments, the plurality of supporting ribs 36 are disposed at two sides of the conducting portion 322 separately, and the supporting ribs 36 function to fix the conducting portion 322, thus improving the problem of low battery performance due to shaking, bending, deformation, or the like of the conducting portion 322 by an external force.

In some embodiments, as shown in Fig. 14, the battery cell further includes a separator 37 which is disposed between the bent portion 342 and the electrode body 33.

Optionally, the separator 37 is made of an insulation material.

Optionally, the separator 37 is a cylinder extending along the third direction Z, and in the third direction Z, a length of the separator 37 is the same as a length of the bent portion 342.

Optionally, the separator 37 is bonded or snap-fitted to the tab 34.

Optionally, in the first direction X, as long as the two bent portions 342 extend toward each other, a separator 37 is disposed between two adjacent tabs 34 in the first direction X; or as long as the two bent portions 342 extend in opposite directions or in the same direction, a separator 37 is disposed between the bent portion 342 of the tab 34 and the electrode body 33.

In these embodiments, the separator 37 is disposed between the bent portion 342 and the electrode body 33 and insulates the bent portion 342 from the electrode body 33, which also reduces the risk of a short circuit due to insertion of the tabs 34 into the electrode body 33 by an external force.

In some embodiments, as shown in Fig. 14, at least part of a surface of the separator 37 abuts against the bent portion 342.

In these embodiments, at least part of the surface of the separator 37 abuts against the bent portion 342, and the separator 37 functions to support the bent portion 342, which further reduces the risk of a short circuit due to insertion of the tabs 34 into the electrode body 33 by an external force.

In some embodiments, as shown in Fig. 14, in the second direction Y, a projection of the connecting portion 321 is within a projection of the separator 37.

In these embodiments, a projection of the connecting portion 321 is within a projection of the separator 37, and the separator 37 functions to insulate the connecting portion 321 from the electrode body 33, thus improving the problem of a short circuit of the battery due to an accidental conduction of the connecting portion 321 and the electrode body 33.

In some embodiments, as shown in Fig. 14, a surface of the separator 37 facing the electrode body 33 and the electrode body 33 are adapted in shape and abut against each other.

Optionally, a surface of the separator 37 facing away from the electrode body 33 abuts against the bent portion 342, and a surface of the separator 37 facing the electrode body 33 and the electrode body 33 are adapted in shape and abut against each other.

Optionally, the bent portions 342 of two adjacent tabs 34 in the first direction X extend toward each other. A plurality of tab pieces are gathered together at the extension portions 341 and form a slope at a position where the extension portions 341 are located; the extension portions 341 of two adjacent tabs 34 in the first direction X form a V-shaped groove extending along the third direction Z, and the surface of the separator 37 facing the electrode body 33 is in a V shape, which is adapted in shape to the electrode body 33 and abuts against the electrode body 33.

Optionally, the extension portions 341 and the bent portions 342 of two adjacent tabs 34 in the first direction X form a triangular prism-shaped space hollowed and extending along the third direction Z, and the separator 37 is accommodated and at least partially filled in the triangular prism-shaped space and is shape of a triangular prism or a pentagonal prism.

In these embodiments, a surface of the separator 37 facing the electrode body 33 and the electrode body 33 are adapted in shape and abut against each other, so the separator 37 is not easy to fall off, thus improving the assembly efficiency.

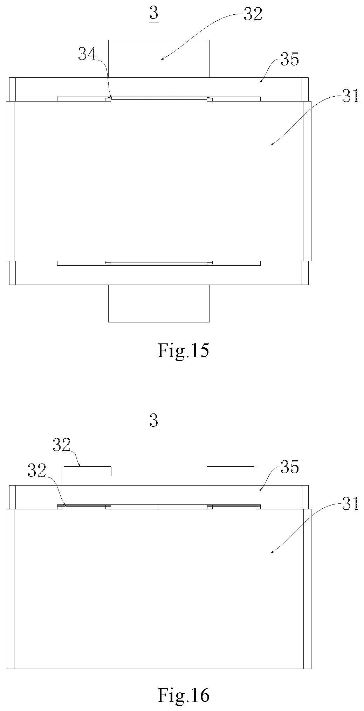

As shown in Figs. 15 and 16, Fig. 15 is a front view of a battery cell provided by an embodiment of this application, and Fig. 16 is a front view of a battery cell provided by another embodiment of this application.

In some embodiments, as shown in Figs. 14 to 16, along the second direction Y, the tabs 34 extend from two ends of the electrode body 33, and the support 35 is disposed at the two ends of the electrode assembly 33 in the second direction.

Optionally, the tabs 34 extending from two ends of the electrode body means that in the second direction Y, the positive electrode tabs and the negative electrode tabs extend from two ends of the electrode body 33 separately, and the support 35 is disposed at the two ends of the electrode assembly 31.

Optionally, in the second direction Y, the positive electrode tab and the negative electrode tab extend from one end of the electrode body 33 and are both connected with an adapter 32, and the support 35 is disposed with two apertures 351 through which two adapter 32 both protrude out.

In these embodiments, the support 35 can improve the strength of the tab 34 area of the battery cell 3, thus improving the safety performance of the battery.

In some embodiments, as shown in Figs. 14 to 16, the electrode assembly 31 includes N electrode bodies 33 arranged along the first direction X, N is an even number, and the bent portions 342 of 2/N of the tabs 34 extend toward the bent portions 342 of the other 2/N of the tabs 34.

In these embodiments, the electrode assembly 31 includes N electrode bodies 33 arranged along the first direction X, N is an even number, and the bent portions 342 of 2/N of the tabs 34 extend toward the bent portions 342 of the other 2/N of the tabs 34, and the bent portions 342 extending toward each other reduces the difficulty of closing up the tabs 34, improving the welding reliability between the bent portions 342 and the connecting portions 321, and thus improving the battery performance.

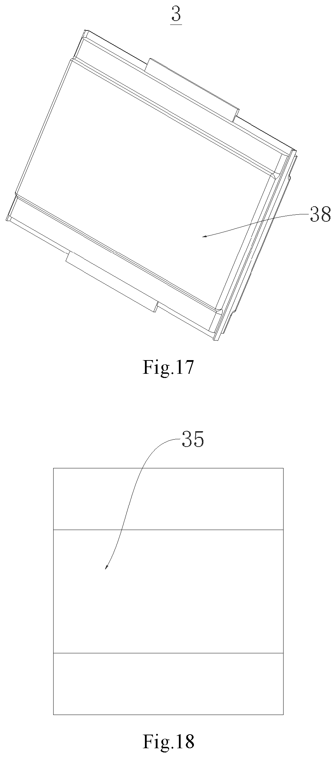

As shown in Fig.17, Fig. 17 is a schematic structural view of a battery cell provided by an embodiment of this application.

In some embodiments, as shown in Figs. 14 and 17, the battery cell 3 further includes a casing 38 which is an enveloping film, the enveloping film envelops an outside of the electrode assembly 31, the casing 38 is disposed with an opening through which the conducting portion 322 protrudes out, and the casing 38 and the conducting portion 322 are sealingly connected.

Optionally, an insulating layer is disposed on a surface of the conducting portion 322, sealingly connected with the opening, and configured to insulate the conducting portion 322 from the casing 38, and the insulating layer being disposed on a surface of the conducting portion 322 reduces the risk of a short circuit of the battery due to an accidental conduction between the conducting portion 322 and the casing 38.

Optionally, the enveloping film is an aluminum-plastic film, a steel-plastic film or other metal-plastic films, and the enveloping film envelops an outside of the electrode assembly 31 for containing and protecting the electrode assembly 31.

In these embodiments, the casing 38 is an enveloping film which envelops an outside of the electrode assembly 31, and the casing 38 functions to protect and accommodate the electrode assembly 31 and is sealingly connected with the conducting portion 322, which reduces the risk of electrolyte leakage in the conducting portion 32 area.

As shown in Fig. 18, Fig. 18 is a side view of a support 35 of a battery cell provided by an embodiment of this application.

In some embodiments, as shown in Figs. 14 and 18, in the first direction X, a thickness of the support 35 is T5, a thickness of the electrode assembly 31 is T6, and 1/3≤T5/T6≤1.

Optionally, a corner of the support 35 is rounded, thus improving the problem that the support 35 scratches the casing 38.

Optionally, in the third direction Z, a length of the support 35 is similar to a length of the electrode assembly 31, thus improving the problem that the casing 38 is subjected to tensile breaks, which is caused by drastic changes in thicknesses of the support 35 and the electrode assembly 31.

In these embodiments, a thickness of the support 35 is T5, a thickness of the electrode assembly 31 is T6, and 1/3≤T5/T6≤1, thus improving the problem that the casing 38 is subjected to tensile breaks, which is caused by drastic changes in thicknesses of the support 35 and the electrode assembly 31.

In some embodiments, as shown in Figs. 15 and 18, the support 35 is made of an insulation material.

Optionally, the material of the support 35 has fireproof characteristics.

In these embodiments, the support 35 is made of an insulation material for insulating the support 35 from the electrode assembly 31, thus improving the safety performance of the battery.

In some embodiments, as shown in Figs.14 and 18, the conducting portion 322 is configured to conduct the electric power of the electrode body 33 to the outside.

In these embodiments, the conducting portion 322 is configured to conduct the current generated by the electrode body 33 to the outside.

According to some embodiments of this application, this application also provides a battery, including the battery cell of any one of the above solutions.

According to some embodiments of this application, this application also provides an electricity consuming device including the battery of the above solution, and the battery is configured to provide electric power for the electric device.

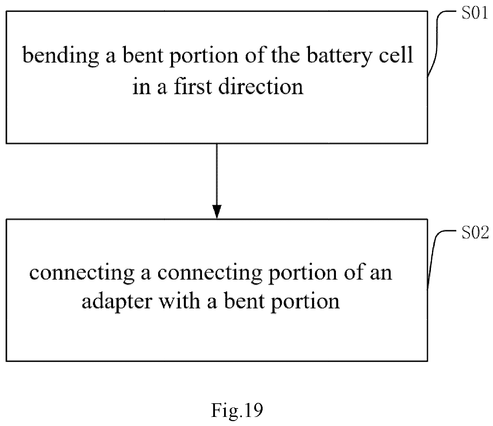

As shown in Fig. 19, Fig. 19 is a flowchart of a preparation method for preparing a battery cell provided by an embodiment of this application.

As shown in Fig.19, according to some embodiments of this application, this application also provides a preparation method for preparing a battery cell of any one of the above solutions, which includes
S01: bending a bent portion of the battery cell toward a first direction; and
S02: connecting the connecting portion with the bent portion of the adapter.

The above steps "S01" and "S02" only intend to improve the readability and not to limit the actual preparation sequence and users may select according to the actual situation, first "bending a bent portion of the battery cell in a first direction and then "connecting a connecting portion with the bent portion of an adapter", or first "connecting a connecting portion with a bent portion of an adapter" and then "bending the bent portion of the battery cell in a first direction".

In these embodiments, the bending arrangement of the bent portion enhances the structural strength of the tabs, improving the problem of degradation in internal electrical connection of the battery due to damage to the tabs by an external force, and thus improving the battery performance.

In some embodiments, the preparation method further includes sleeving the support on an outside of the adapter.

In these embodiments, the support is sleeved on an outside of the adapter, which enhances the strength of the adapter area of the battery cell, improving the safety performance of the battery.

The embodiments of this application provide a battery cell, as shown in Figs. 1 to 18, the battery cell 3 includes an electrode assembly 31 and an adapter 32, the electrode assembly 31 includes at least two electrode bodies 33 arranged side by side along a first direction and tabs 34 extending from the electrode bodies 33, the tab 34 includes an extension portion 341 and a bent portion 342 connected with each other, the extension portion 341 extends from the electrode body 33 along a second direction Y, the bent portion 342 is connected with an end of the extension portion 341 away from the electrode body 33 and extends along the first direction X, the adapter 32 includes a connecting portion 321 and a conducting portion 322, the connecting portion 321 extends along the first direction X, is connected to at least two bent portions 342 of the electrode assembly 31, and includes at least two sub-connecting portions 3211 along the first direction X, each sub-connecting portion 3211 is connected with at least one bent portion 342, the bent portion 342 is connected with a surface of the connecting portion 321 facing the electrode body 33, the conducting portion 322 is disposed in a middle portion of the connecting portion 321 along the first direction X and at an end of the connecting portion 321 away from the tabs 34 and extends along the second direction Y, and in the second direction Y, a thickness of the bent portion 342 is T1, a thickness of the connecting portion 321 is T2, and 1≤T2/T1≤4.

The battery cell 3 also includes a support 35 which is made of an insulation material, the support 35 is disposed at at least one end of the electrode assembly 31 in the first direction X, is sleeved on an outer periphery of the conducting portion 322, and includes an aperture 351 penetrated along the second direction Y, the conducting portion 322 protrudes out through the aperture 351, and in the first direction X, a width of the aperture 351 is T3, a width of the conducting portion 322 is T4, and 1<T3/T4<3.

The support 35 includes a top wall 353 and a side wall 354 connected with a periphery of the top wall 353, the top wall 353 and the side wall 354 are connected with each other to form an accommodating cavity 352 that is open toward the electrode body 33, the connecting portion 321 is located in the accommodating cavity 352, and the aperture 351 is disposed on the top wall 353. The support 35 includes protrusions 355, a groove 357 and supporting ribs 36, the protrusions 355 are disposed at two ends of the support 35 along a third direction Z, protrude from the side wall 354 toward the electrode body 33 and abut against the electrode body 33, the groove 357 is disposed at an end of the support 35 facing the electrode body 33 along the second direction Y and configured to avoid the tabs 34, the supporting ribs 36 are disposed in the accommodating cavity 352, and a plurality of supporting ribs 36 are spaced apart along the third direction Z and disposed at two sides of the conducting portion 322 separately.

The battery cell 3 also includes a separator 37 which is disposed between the bent portion 342 and the electrode body 33, a surface of the separator 37 facing the electrode body 33 and the electrode body 33 and the electrode body 33 are adapted in shape and abut against each other, and in the second direction Y, a projection of the connecting portion 321 is within a projection of the separator 37.

The electrode assembly 31 includes N electrode bodies 33 arranged along the first direction X, N is an even number, the bent portions 342 of 2/N of the tabs 34 and the bent portions 342 of the other 2/N of the tabs 34 extend toward each other, the battery cell 3 also includes a casing 38 which is an enveloping film, the enveloping film envelops an outside of the electrode assembly 31, and the casing 38 is disposed with an opening through which the conducting portion 322 protrudes out and is sealingly connected with the conducting portion 322. In the first direction X, a thickness of the support 35 is T5, a thickness of the electrode assembly 31 is T6, and 1/3≤T5/T6≤1.

In the battery cell 3 of the embodiments of this application, the electrode assembly 31 includes at least two electrode bodies 33, and a plurality of electrode bodies 33 increase the electric capacity of the battery cell 3; the electrode body 33 is disposed with tabs 34 which include an extension portion 341 and a bent portion 342 connected with each other, the extension portion 341 extends from the electrode body 33 along a second direction Y, the bend portion 342 is connected with one end of the extension portion 342 away from the electrode body 33 and extends along the first direction X, the adapter 32 is connected with the tabs 34 and conducts the current of the electrode body 33 to the outside, and the bending arrangement of the tabs 34 enhances the structural strength of the tabs 34, improving the problem of degradation in the internal electrical connection performance of the battery due to damage of the tabs 34 by an external force, and thus improving the battery performance.

It is hereby noted that to the extent that no conflict occurs, the embodiments of this application and the features in the embodiments may be combined with each other.

Finally, it is hereby noted that the foregoing embodiments are merely intended to describe the technical solutions of this application but not to limit this application; although this application has been described in detail with reference to the foregoing embodiments, a person of ordinary skill in the art understands that modifications may still be made to the technical solutions described in the foregoing embodiments, or equivalent replacements may still be made to some technical features in the technical solutions, and such modifications and replacements do not make the essence of the corresponding technical solutions depart from the spirit and scope of the technical solutions of the embodiments of this application.

## Claims

1. A battery cell, comprising
an electrode assembly comprising at least two electrode bodies arranged side by side along a first direction and tabs extending from the electrode bodies, the tabs comprising an extension portion and a bent portion connected with each other, the extension portion extending from the electrode body along a second direction, the bent portion being connected with an end of the extension portion away from the electrode body and extending along the first direction, and the second direction intersecting with the first direction; and
an adapter comprising a connecting portion and a conducting portion, the connecting portion extending along the first direction and being connected with at least two bent portions of the electrode assembly, and the conducting portion being disposed on a side of the connecting portion away from the tab and extending along the second direction.

2. The battery cell according to claim 1, wherein the bent portion is connected with a surface of the connecting portion facing the electrode body.

3. The battery cell according to any one of claims 1 or 2, wherein the connecting portion comprises at least two sub-connecting portions along the first direction, and each of the sub-connecting portions is connected with at least one bent portion.

4. The pouch-type battery cell according to any one of claims 1 to 3, wherein the conducting portion is connected to a middle portion of the connecting portion along the first direction, and the at least two sub-connecting portions are located at two sides of the conducting portion.

5. The battery cell according to any one of claims 1 to 4, wherein in the second direction, a thickness of the bent portion is T1, a thickness of the connecting portion is T2, and 1≤T2/T1≤4.

6. The battery cell according to any one of claims 1 to 5, further comprising
a support disposed at at least one end of the electrode assembly in the first direction and sleeved on an outer periphery of the conducting portion.

7. The battery cell according to claim 6, wherein the support comprises an aperture penetrated along the second direction, and the conducting portion protrudes out through the aperture.

8. The battery cell according to claim 7, wherein in the first direction, a width of the aperture is T3, a width of the conducting portion is T4, and 1<T3/T4<3.

9. The battery cell according to any one of claims 7 or 8, wherein the support comprises a top wall and a side wall connected with a periphery of the top wall, the top wall and the side wall are connected with each other to form an accommodating cavity that is open toward the electrode body, the connecting portion is located in the accommodating cavity, and the aperture is disposed on the top wall.

10. The battery cell according to claim 9, wherein the support comprises
protrusions disposed at two ends of the support along a third direction, the protrusions protruding from the side wall toward the electrode body and abut against the electrode body, and the third direction intersecting with the first direction and the second direction.

11. The battery cell according to claim 9 or 10, wherein the support further comprises
a groove disposed at an end of the support facing the electrode body along the second direction, the groove being configured to avoid the tabs.

12. The battery cell according to any one of claims 9 to 11, wherein the support comprises
supporting ribs disposed in the accommodating cavity, a plurality of supporting ribs being spaced apart along the third direction, and the plurality of supporting ribs being disposed at two sides of the conducting portion separately.

13. The battery cell according to any one of claims 1 to 12, further comprising
a separator disposed between the bent portion and the electrode body.

14. The battery cell according to claim 13, wherein at least part of a surface of the separator abuts against the bent portion.

15. The battery cell according to any one of claims 13 or 14, wherein in the second direction, a projection of the connecting portion is within a projection of the separator.

16. The battery cell according to any one of claims 13 to 15, wherein a surface of the separator facing the electrode body and the electrode body are adapted in shape and abut against each other.

17. The battery cell according to any one of claims 6 to 12, wherein in the second direction, the tabs protrude from two ends of the electrode body, and the supports are disposed at two ends of the electrode assembly in the second direction.

18. The battery cell according to any one of claims 1 to 17, wherein the electrode assembly comprises N electrode bodies arranged along the first direction, N is an even number, and the bent portions of 2/N of the tabs extend toward the bent portions of the other 2/N of the tabs.

19. The battery cell according to any one of claims 1 to 18, further comprising
a casing which is an enveloping film, the enveloping film covering an outside of the electrode assembly, the casing being disposed with an opening through which the conducting portion protrudes out, and the casing and the conducting portion being sealingly connected.

20. The battery cell according to any one of claims 6 to 19, wherein in the first direction, a thickness of the support is T5, a thickness of the electrode assembly is T6, and 1/3≤T5/T6≤1.

21. The battery cell according to any one of claims 6 to 20, wherein the support is made of an insulation material.

22. The battery cell according to any one of claims 1 to 21, wherein the conducting portion is configured to conduct electric power of the electrode body to outside.

23. A battery comprising a plurality of battery cells according to any one of claims 1 to 22.

24. An electricity consuming device comprising the battery according to claim 23 for supplying electrical power.

25. A preparation method for preparing the battery cell according to any one of claims 1 to 22, comprising
bending a bent portion of the battery cell toward a first direction; and
connecting a connecting portion of an adapter with the bent portion.

26. The preparation method according to claim 25, wherein the preparation method further comprises sleeving a support onto an outside of the adapter.
